# DEMANDE DE BREVET EUROPEEN

(11) **EP 1 431 541 A1**
(43) Date de publication de la demande: **23.06.2004**
(21) Numéro de dépôt: 03293257.6
(22) Date de dépôt: 19.12.2003
(51) Int. Cl.: F02B 31/08, F02F 1/42, F02D 13/02

(54) **Moteur à combustion interne comportant des moyens pour faire varier l'intensité du swirl**

(30) Priorité: 19.12.2002 FR 0216156
(71) Demandeur: Renault s.a.s., 92100 Boulogne Billancourt (FR)
(72) Inventeur: Rizzo, Stéphane, 78420 Carrières sur Seine (FR)
(74) Mandataire: Rougemont, Bernard

(57) **Abrégé**

L'invention propose un moteur à combustion interne (10), notamment du type Diesel à injection directe, comportant un circuit d'admission (14) d'air et un circuit d'échappement (16), du type dans lequel la culasse (20) comporte une face supérieure (36), du type dans lequel chaque cylindre (C1,C2,C3,C4) comporte au moins deux conduits d'admission (32, 34) et deux soupapes (24,26) associées, l'un au moins des conduits d'admission (32) comportant des moyens (42,46) pour produire un mouvement de « swirl » dans l'air d'admission. Chaque cylindre (C1,C2,C3,C4) comporte des moyens (42, 46) permettant de faire varier l'intensité dudit mouvement tourbillonnaire de manière sensiblement continue, et les deux conduits d'admission (32, 34) de chaque cylindre (C1,C2,C3,C4) débouchent dans la face supérieure (36) de la culasse (20).

## Description

La présente invention concerne un moteur à combustion interne de véhicule automobile.

La présente invention concerne plus particulièrement un moteur à combustion interne, notamment du type Diesel à injection directe, comportant un circuit d'admission d'air ou de mélange air/carburant et un circuit d'échappement de gaz brûlés qui communiquent, par la face inférieure d'une culasse, avec les chambres de combustion de plusieurs cylindres du moteur, du type dans lequel les communications des circuits d'admission et d'échappement avec chaque chambre sont susceptibles d'être obturées chacune respectivement par au moins une soupape, respectivement d'admission et d'échappement, du type dans lequel la culasse comporte une face globalement supérieure sensiblement plane, opposée à la face inférieure, du type dans lequel chaque cylindre comporte au moins deux conduits d'admission et deux soupapes associées, l'un au moins des conduits d'admission comportant des moyens pour produire un mouvement tourbillonnaire ordonné du type « swirl » dans l'air, ou dans le mélange air/carburant, à l'admission.

Pour satisfaire les normes qui définissent la valeur maximale des émissions polluantes, il est nécessaire de réduire la consommation spécifique des moteurs, ce qui demande une bonne maîtrise des paramètres de la combustion afin de mieux la contrôler.

Dans les moteurs à combustion interne, qu'il s'agisse des moteurs à essence ou surtout des moteurs Diesel à injection directe, il est nécessaire, pour assurer un mélange correct entre l'air et le carburant dans le cylindre, d'imprimer à l'air un mouvement tourbillonnaire de rotation dans la chambre de combustion. Ce mouvement de rotation autour d'un axe parallèle à l'axe du cylindre, est caractérisé par le rapport de la vitesse de rotation de l'air dans le cylindre à la vitesse de rotation du moteur. On appelle « rapport de tourbillonnement » ou plus généralement « swirl », le rapport entre la vitesse de rotation de l'air créée à l'admission et la vitesse de rotation du moteur. Dans un moteur Diesel à injection directe, un tel rapport de tourbillonnement ou swirl, nécessaire au moment de la phase d'injection, est particulièrement souhaité pour le fonctionnement du moteur à faible charge.

On définit en outre la perméabilité dans un cylindre de moteur à combustion, en particulier de moteur Diesel, comme étant le rapport de la section effective de passage dégagée par la soupape d'admission à la section transversale du cylindre. La perméabilité dépend donc, non seulement de la différence de pression de part et d'autre de la soupape d'admission, mais également du débit d'air admis dans le cylindre.

L'invention vise à proposer un moteur à combustion interne qui permette à la fois de faire varier la valeur du mouvement aérodynamique dans la chambre au point mort haut de la course du piston associé de manière continue, de faciliter l'agencement des éléments périphériques du moteur sur la culasse, et de répondre aux critères usuels de résistance aux contraintes mécaniques et thermiques.

L'invention vise à satisfaire à ces exigences de manière simple et économique.

Dans ce but, l'invention propose un moteur du type décrit précédemment, caractérisé en ce que chaque cylindre comporte des moyens permettant de faire varier l'intensité dudit mouvement tourbillonnaire de manière sensiblement continue, et en ce que les deux conduits d'admission de chaque cylindre débouchent dans la face supérieure de la culasse.

Selon d'autres caractéristiques de l'invention :
- les ouvertures de tous les conduits d'admission dans les chambres de combustion sont sensiblement alignées longitudinalement, de manière que toutes les soupapes d'admission soient sensiblement alignées longitudinalement et qu'elles puissent être commandées par un seul arbre à cames longitudinal dit d'admission ;
- le moteur comporte un dispositif de déphasage de l'arbre à cames d'admission par rapport au vilebrequin du moteur ;
- au moins un premier conduit d'admission de chaque cylindre est divisé en deux parties par une paroi verticale de séparation, et l'une des deux parties est équipée de moyens d'obturation réglables, de manière à faire varier l'intensité du mouvement tourbillonnaire de manière sensiblement continue ;
- chaque cylindre comporte un premier conduit d'admission qui comporte des moyens pour faire varier l'intensité du mouvement tourbillonnaire et un second conduit d'admission qui est du type hélicoïdal, de manière à produire continuellement un mouvement tourbillonnaire ordonné du type « swirl » ;
- le premier conduit d'admission de chaque cylindre est du type tangentiel ;
- les deux conduits d'admission de chaque cylindre débouchent séparément dans la face supérieure de la culasse.

D'autres caractéristiques et avantages de l'invention apparaîtront à la lecture de la description détaillée qui suit pour la compréhension de laquelle on se reportera aux dessins annexés dans lesquels :
- la figure 1 est une vue du dessus qui représente schématiquement un moteur à combustion interne réalisé conformément aux enseignements de l'invention ;
- la figure 2 est une vue de côté avec arrachement qui représente schématiquement le moteur de la figure 1.

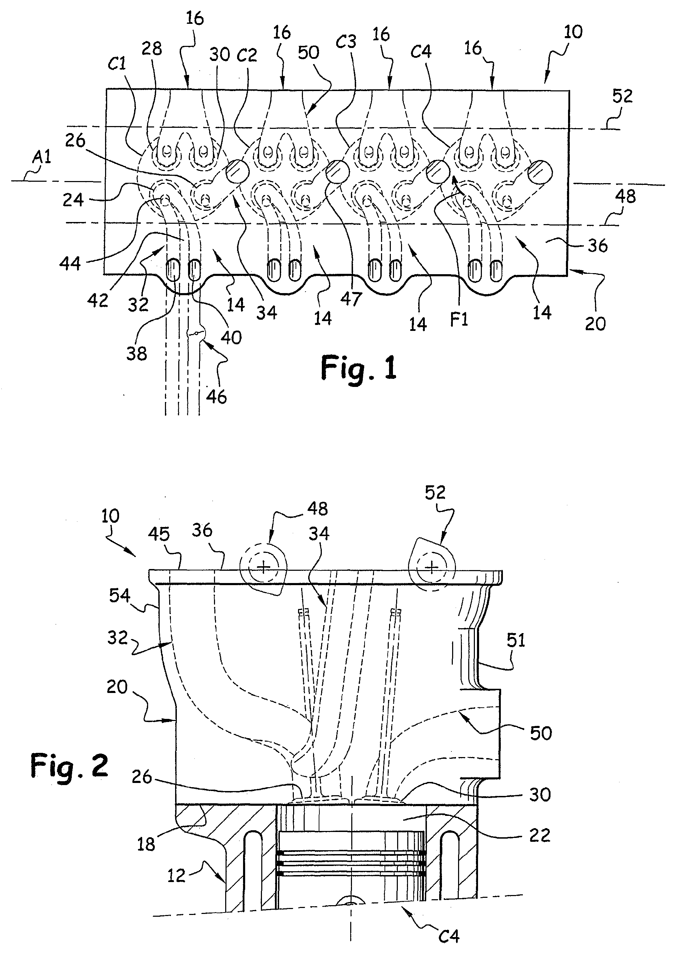

On a représenté schématiquement sur les figures 1 et 2 un moteur à combustion interne 10 qui est réalisé conformément aux enseignements de l'invention.

Le moteur 10 est de préférence du type Diesel à injection directe.

Selon le mode de réalisation représenté ici, le moteur 10 comporte un bloc-moteur 12 à quatre cylindres C1, C2, C3, C4 qui sont alignés suivant une direction longitudinale A1.

Dans la suite de la description, on utilisera à titre non limitatif une orientation verticale, suivant une direction parallèle à l'axe de chaque cylindre Ci, qui correspond à l'orientation de la figure 2.

Le moteur 10 comporte un circuit d'admission d'air 14 et un circuit d'échappement de gaz brûlés 16 qui communiquent, par la face inférieure 18 d'une culasse 20, avec les chambres de combustion 22 des cylindres Ci du moteur 10.

Le circuit d'admission 14 et le circuit d'échappement 16 comportent respectivement un collecteur d'admission et un collecteur d'échappement, qui n'ont pas été représentés ici en vue de faciliter la compréhension des schémas.

Les communications des circuits d'admission 14 et d'échappement 16 avec chaque chambre 22 sont susceptibles d'être obturées chacune respectivement par au moins une soupape, respectivement d'admission et d'échappement.

Selon le mode de réalisation représenté ici, chaque chambre 20 comporte deux soupapes d'admission 24, 26 et deux soupapes d'échappement 28, 30.

Conformément aux enseignements de l'invention, chaque cylindre Ci comporte un premier conduit d'admission 32 et un second conduit d'admission 34 qui sont associés respectivement aux deux soupapes d'admission 24, 26 et qui débouchent, ici séparément, dans la face supérieure 36 sensiblement plane de la culasse 20.

Le premier conduit d'admission 32 est ici du type tangentiel, c'est à dire qu'il débouche dans le cylindre Ci d'une manière sensiblement tangentielle par rapport à la paroi axiale du cylindre Ci. En d'autres termes, la direction générale de sortie de l'air issu du premier conduit d'admission 32, illustrée sur la figure 1 par la flèche F1, est sensiblement tangentielle à la paroi axiale du cylindre Ci.

La structure du conduit d'admission tangentiel 32 confère à l'air d'admission un mouvement tourbillonnaire ordonné du type swirl.

Avantageusement, le conduit tangentiel 32 est divisé en une première et une seconde parties 38, 40, qui sont ici de formes et de dimensions similaires, par une paroi verticale de séparation 42.

Selon le mode de réalisation représenté ici, la paroi de séparation 42 s'étend globalement sur toute la longueur du conduit tangentiel 32, c'est à dire depuis son entrée 45, dans la face supérieure 36 de la culasse 20, jusqu'à la proximité immédiate de la tige 44 de la soupape d'admission 24 associée.

Des moyens d'obturation 46 de la seconde partie 40 du conduit d'admission tangentiel 32 sont prévus. Ces moyens d'obturation 46 ont été schématisés ici sous la forme d'un volet pivotant en amont de la culasse 20, mais ils peuvent être agencés dans la culasse 20.

Le pilotage des moyens d'obturation 46 permet de faire varier l'intensité du swirl de manière sensiblement continue.

Pour plus de précision sur la réalisation d'un tel conduit d'admission tangentiel 32, on peut se reporter au document EP-A-1.188.912, notamment dans sa description (colonne 3, paragraphe 21, à colonne 6, paragraphe 35).

Le second conduit d'admission 34 est ici du type hélicoïdal, c'est à dire qu'il a globalement la forme d'un tronçon d'hélice, avant de déboucher dans le cylindre Ci, ce qui confère à l'air d'admission un mouvement de swirl lorsqu'il pénètre dans la chambre de combustion 22.

Le second conduit d'admission 34 comporte une entrée 47 dans la face supérieure 36 de la culasse 20.

Avantageusement, les ouvertures des conduits d'admission 32, 34 dans les chambres de combustion 22 des quatre cylindres C1, C2, C3, C4 sont sensiblement alignées suivant une direction longitudinale. Cette disposition des conduits d'admission 32, 34 permet d'aligner longitudinalement les soupapes d'admission 24, 26 des quatre cylindres C1, C2, C3, C4, de sorte que toutes les soupapes d'admission 24, 26 peuvent être commandées au moyen d'un seul arbre à cames longitudinal dit d'admission 48.

Le moteur 10 a été représenté ici de manière simplifiée, de sorte que les moyens de liaison, qui sont de type conventionnel, entre l'arbre à cames d'admission 48 et les soupapes d'admission 24, 26 n'ont pas été représentés.

Selon le mode de réalisation représenté ici, chaque cylindre Ci comporte un conduit d'échappement 50 qui débouche d'un côté dans la face latérale droite 51 de la culasse 20, en considérant la figure 2, et de l'autre côté dans la chambre de combustion 22 par deux ouvertures distinctes, susceptibles d'être obturées respectivement par les deux soupapes d'échappement 28, 30 associées.

De manière similaire aux éléments de l'admission, les ouvertures de tous les conduits d'échappement 50 sont sensiblement alignées suivant une direction longitudinale, ce qui permet d'aligner longitudinalement les soupapes d'échappement 28, 30, de sorte qu'elles peuvent être commandées par un seul arbre à cames longitudinal dit d'échappement 52.

Selon le mode de réalisation représenté ici, le moteur 10 comporte donc un arbre à cames d'admission 48 et un arbre à cames d'échappement 52 distincts, qui peuvent chacun être accouplés à un dispositif de déphasage (non représenté) de l'arbre à cames 48, 52 par rapport au vilebrequin du moteur 10, de manière à maîtriser et adapter à tout instant les conditions de fonctionnement du moteur 10.

L'agencement des conduits d'admission 32, 34 selon l'invention, en faisant déboucher chaque conduit d'admission 32, 34 dans la face supérieure 36 de la culasse 20, permet de dégager la face latérale gauche 54 de la culasse 20, en considérant la figure 2.

Le dégagement de la face latérale gauche 54 permet de faciliter l'implantation d'accessoires du moteur 10 au voisinage de cette face 54. En particulier, il est plus facile d'implanter des composants sur la face latérale gauche 54 de la culasse 20, tels qu'une bougie de préchauffage (non représentée). Les composants agencés sur la face latérale gauche 54 sont aussi plus accessibles.

De plus, le regroupement des entrées des conduits d'admission 32, 34 sur une seule face supérieure 36 sensiblement plane permet de réaliser un circuit d'admission 14 plus compact et plus simple. En particulier, le dispositif d'obturation réglable 46 peut être facilement agencé sur la face supérieure 36 de la culasse 20.

Ce regroupement facilite aussi la réalisation de l'étanchéité entre la culasse 20 et les éléments externes du circuit d'admission 14, tels que le dispositif d'obturation réglable 46, puisqu'il n'y a qu'une seule interface entre ces éléments externes et la face supérieure 36 de la culasse 20. Par conséquent, une seule face 36 de la culasse 20 est usinée pour recevoir les éléments externes du circuit d'admission 14.

L'architecture du moteur 10 selon l'invention à quatre soupapes 24, 26, 28, 30 par cylindre Ci permet d'avoir de bonnes performances aérodynamiques, en particulier une importante perméabilité de la culasse 20. Cette caractéristique, couplée au moyens de variation continue de l'intensité du swirl, permet donc d'optimiser au mieux la combustion en minimisant les émissions polluantes.

## Revendications

1. Moteur à combustion interne (10), notamment du type Diesel à injection directe, comportant un circuit d'admission (14) d'air ou de mélange air/carburant et un circuit d'échappement (16) de gaz brûlés qui communiquent, par la face inférieure (18) d'une culasse (20), avec les chambres de combustion (22) de plusieurs cylindres (C1, C2, C3, C4) du moteur (10), du type dans lequel les communications des circuits d'admission (14) et d'échappement (16) avec chaque chambre (22) sont susceptibles d'être obturées chacune respectivement par au moins une soupape, respectivement d'admission (24, 26) et d'échappement (28, 30), du type dans lequel la culasse (20) comporte une face globalement supérieure (36) sensiblement plane, opposée à la face inférieure (18), du type dans lequel chaque cylindre (C1, C2, C3, C4) comporte au moins deux conduits d'admission (32, 34) et deux soupapes (24, 26) associées, l'un au moins des conduits d'admission (32) comportant des moyens (42, 46) pour produire un mouvement tourbillonnaire ordonné du type « swirl » dans l'air, ou dans le mélange air/carburant, à l'admission,
**caractérisé en ce que** chaque cylindre (C1, C2, C3, C4) comporte des moyens (42, 46) permettant de faire varier l'intensité dudit mouvement tourbillonnaire de manière sensiblement continue, et **en ce que** les deux conduits d'admission (32, 34) de chaque cylindre (C1, C2, C3, C4) débouchent dans la face supérieure (36) de la culasse (20).

2. Moteur (10) selon la revendication précédente, **caractérisé en ce que** les ouvertures de tous les conduits d'admission (32, 34) dans les chambres de combustion (22) sont sensiblement alignées longitudinalement, de manière que toutes les soupapes d'admission (24, 26) soient sensiblement alignées longitudinalement et qu'elles puissent être commandées par un seul arbre à cames longitudinal dit d'admission (48).

3. Moteur (10) selon la revendication précédente, **caractérisé en ce qu'**il comporte un dispositif de déphasage de l'arbre à cames d'admission (48) par rapport au vilebrequin du moteur (10).

4. Moteur (10) selon l'une quelconque des revendications précédentes, **caractérisé en ce que** au moins un premier conduit d'admission (32) de chaque cylindre (C1, C2, C3, C4) est divisé en deux parties (38, 40) par une paroi verticale de séparation (42), et **en ce que** l'une des deux parties (40) est équipée de moyens d'obturation réglables (46), de manière à faire varier l'intensité du mouvement tourbillonnaire de manière sensiblement continue.

5. Moteur (10) selon l'une quelconque des revendications précédentes, **caractérisé en ce que** chaque cylindre (C1, C2, C3, C4) comporte un premier conduit d'admission (32) qui comporte des moyens (42, 46) pour faire varier l'intensité du mouvement tourbillonnaire et un second conduit d'admission (34) qui est du type hélicoïdal, de manière à produire continuellement un mouvement tourbillonnaire ordonné du type « swirl ».

6. Moteur (10) selon la revendication précédente, **caractérisé en ce que** le premier conduit d'admission (32) de chaque cylindre (C1, C2, C3, C4) est du type tangentiel.

7. Moteur (10) selon l'une quelconque des revendications précédentes, **caractérisé en ce que** les deux conduits d'admission (32, 34) de chaque cylindre (C1, C2; C3, C4) débouchent séparément dans la face supérieure (36) de la culasse (20).
